# EUROPEAN PATENT APPLICATION

(11) **EP 1 695 620 A1**
(43) Date of publication of application: **30.08.2006**
(21) Application number: 05425109.5
(22) Date of filing: 28.02.2005
(51) Int. Cl.: A01M 21/04

(54) **Apparatus for killing infesting weeds**

(71) Applicant: Grilli, Giovanni, 00137 Roma RM (IT)
(72) Inventor: Grilli, Giovanni, 00137 Roma RM (IT)
(74) Representative: Leone, Mario

(57) **Abstract**

A shrubber for killing infesting weeds (100) nearby and/or at communication routes (200; 300) and the like, comprising a system for producing steam with at least one first boiler (3) apt to the production of steam (4), via one or more heating members (8), from a reserve of water (2) contained in a tank (1). The shrubber further comprises a distribution system (10) of the water (2) and the steam (4); one or more orientable devices (7) connected to the distribution system (10) for emitting steam jets; a control unit (20) for governing the distribution of the water and the steam (4), the values of temperature and pressure reached in the first boiler (3); and means (26) for orienting the devices (7) for emitting steam jets, apt to cooperate with the control unit (20). The passage of the steam jet (6) onto the weeds (100) is such as to carry out their killing.

## Description

The present invention refers to an apparatus for killing infesting weeds in general and in particular to a shrubber for killing medium-small infesting weeds.

The present invention is especially useful for removing shrubby and herbaceous plants and the like nearby and/or at communication routes such as rails for rail vehicles, roads for rubber-tired vehicles and paths generally intended for means of transport, or for cleaning areas circumscribed or delimited by boundaries, in a town or out-of-town environment, such as flowerbeds, gardens and the like.

To date, the service of killing of medium-small infesting weeds, e.g., nearby roads or rails, is usually entrusted by commissioning companies or by involved public authorities to specialized outside firms carrying out such a job upon having been assigned a contract in corresponding local or national calls for tenders.

These specialized firms employ labour equipped with common gardening machines, most times particularly inadequate to carry out the required services as undersized with respect to the stretches of said communication routes to be covered and subjected to reclamation.

Moreover, in case said firms have to operate on roads or railways, their intervention often unavoidably hinders normal traffic, automotive and rail, respectively.

Coordination of the traffic management and of said maintenance and reclamation interventions, though desirable, is particularly difficult to bring about.

The main drawback exhibited by the systems for killing infesting weeds nearby roads or railway stretches and the like, stems from the fact that it is actually unfeasible to plan maintenance and reclamation interventions without having them negatively interfering with the normal functionality of said communication routes.

In most cases such a normal functionality is at least partially compromised, and delays and inefficiencies occur, in vehicle circulation as well as in the fulfilment of the services.

Such delays unavoidably entail a rise of the managing costs.

Moreover, the operators of said contracting firms generally find themselves working in conditions of discomfort and of precarious safety.

In this connection, safety problems posed by interventions nearby clearways, like highways, or rails and the like are well-known.

When yards are rendered safe according to existing regulations, preparation costs are anyhow exceedingly burdensome.

To date, there are no commercially available apparatuses providing, in compliance with safety regulations, an effective solution for carrying out interventions as outlined above, of maintenance and cleaning of communication routes, and concomitantly being of simple conception and easy use.

Hence, object of the present invention is to solve said problems, by proposing a shrubber and a method for killing infesting weeds as defined in claim 1 and in claim 23, respectively.

By virtue of its versatility, the shrubber according to the present invention can advantageously be used for killing infesting and invasive weeds at the edges of roads or thereon, at rails or about the perimeter of flowerbeds, gardens, buildings, etc.

In fact, for any typology of communication route, the shrubber according to the present invention can be integrated into a respective means of transport adapt to the corresponding circulation.

The introduction of the shrubber according to the present invention allows a cutting back of the required labour to the sole operator assigned to the driving of said means of transport.

An additional benefit of the present invention lies in the fact that, given the abovementioned advantageous arrangement thereof on a means of transport ― dedicated or anyhow equipped for carrying out said services ― for each workday a higher number of railway miles can be reclaimed with respect to what is allowed by the apparatuses and methods used to date.

Moreover, the adoption of the present invention and of the corresponding disinfesting method allows, in the specific case of a rail and tram stretch, the optimal coordination of the passage of the means integrating the shrubber with that of other normally functioning means, so as to avoid any discomfort to the custom.

Furthermore, for a still increased ease of execution and of installation of the shrubber, the interventions can be scheduled for night time, in which both railway and road traffic are anyhow sensibly reduced with respect to daytime.

Moreover, the shrubber according to the present invention is characterized by a particular sturdiness and essentiality of its components.

In addition, the shrubber according to the present invention does not provide a mechanical cutting of the infesting weeds, as is the case for common gardening machines or the like; instead, it acts onto the entire body of the herbaceous plants or shrubs so as to cause a progressive withering thereof, even at times subsequent to the extemporaneous treatment, until causing their final death by desiccation.

The method for killing infesting weeds disclosed here emerges as advantageously decisive, whereas the mere cutting off does not ensure a radical and durable result over time.

As abovementioned, these results are attained with a corresponding increase in the safety of the working conditions of the reclamation operators.

Further advantages, as well as the features and the modes of employ of the present invention will be made apparent in the following detailed description of some embodiments thereof, given by way of a non-limiting example, making reference to the figures of the annexed drawings, wherein:
- figure 1 is a side perspective view of a train, at the locomotive thereof there being integrated, in an operative condition, a first embodiment of the shrubber according to the present invention;
- figure 2 is a front perspective view of the train of figure 1;
- figure 3 is a sectional side view of the locomotive of the train of figure 1, in which it is illustrated an installation related to said first embodiment of the shrubber according to the present invention;
- figure 4 is a sectional front view depicting a portion of the system of said first embodiment of the shrubber according to the present invention;
- figure 5 is a sectional view illustrating a detail of devices for outletting steam jets for said first embodiment of the shrubber according to the present invention;
- figure 6 is a top perspective view of a road vehicle in which it is integrated, in an operative condition, a second embodiment of the shrubber according to the present invention;
- figure 7 is a partially sectional front view of a detail of a system related to said second embodiment of the shrubber according to the present invention;
- figure 8 is a sectional side view of the road vehicle of figure 6, in which it is illustrated said system related to said second embodiment of the shrubber according to the present invention;
- figure 9 is a schematization of the system of said first or second embodiment of the shrubber according to the present invention;
- figure 10 is a top side view of a third embodiment of the shrubber according to the present invention, apt to be worn-on by an operator;
- figure 11 is a perspective view of a detail of the embodiment of the shrubber according to the present invention of figure 10;
- figure 12 is a perspective view in which it is represented the use by an operator of the embodiment of the shrubber according to the present invention of figure 10;
- figure 13 is a side perspective view of a train, in which it is integrated, in an operative condition, a fourth embodiment of the shrubber according to the present invention;
- figure 14 is a front perspective view of the train of figure 13;
- figure 15 is a side perspective view of a train, in which it is integrated, in an operative condition, a fifth embodiment of the shrubber according to the present invention;
- figure 16 is a detail illustrating some phases of passage from the non-operative mode to the operative mode of the embodiment of the shrubber according to the present invention of figure 15; and
- figure 17 is a front perspective view of the train of figure 15.

In order to describe the present invention, hereinafter reference will be made to the above indicated figures.

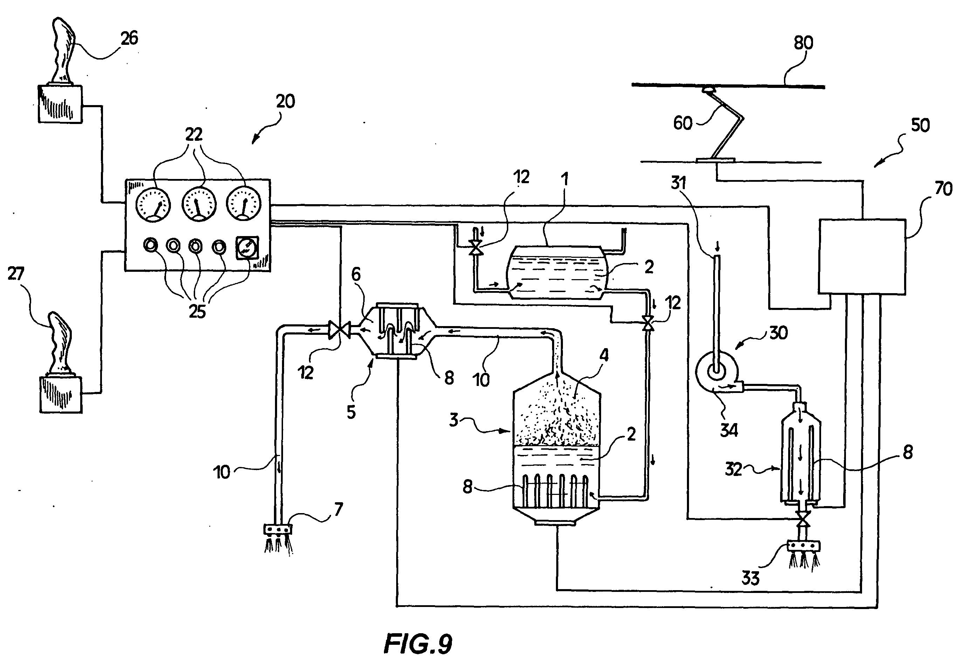

As exemplified in figure 9, a shrubber for killing infesting weeds 100 nearby and/or at communication routes comprises a tank 1 apt to contain a reserve of water 2 and that can be filled according to needs via an inlet duct. The water contained in said tank 1 goes to feed a first boiler 3, in charge of the production of steam 4, e.g., saturated steam with temperatures close to 100°C, via one or more heating members 8 housed therein.

According to the embodiment disclosed here, the shrubber is preferably supplied with electric energy. In this case, the heating members can take the form of resistors 8.

The electric energy may be collected from supply mains 80 and made available, for the operation of the shrubber, via a power supply system 50, comprising electric energy collecting means 60 and transforming means 70.

Alternatively, it may be provided by a secondary power supply unit, e.g., a generating set.

In case the shrubber is intended to be mounted on a rail vehicle, for instance, the power supply system 50 comprises a converter frame, collecting electric energy from supply mains 80 with a voltage typically in the neighbourhood of 3000 V, and allows the power supplying of the shrubber system with a voltage generally in use for industrial works, e.g. of 380 V.

The flow rates of water 2 and of steam 4 are managed and shunted by virtue of a distribution system 10 comprising flow control valves 12.

A control unit 20 governs the distribution system 10, as well as the detection and, retroactively, the determining of parameters like pressure and temperature inside the tank 1 and in said boiler 3.

The control unit 20 can assume the form of a control board, apt to be housed in an operating cab in case the shrubber is integrated to a means of transport, and it comprises control interfaces 22 consultable by an operator and respective actuation means 25.

Such control interfaces 22 comprise parameter-displaying instruments, e.g., thermometers and/or manometers.

The actuation means 25 are selectively operable by an operator on the basis of data highlighted by said instrumentation, so as to adjust pressure and temperature in the system and allow the outflow of the fluids from the delivery ducts provided therefor.

A shrubber according to the present invention further envisages one or more orientable devices 7, connected to said distribution system 10, for emitting steam jets onto the infesting weeds 100.

Therefore, there are provided means 26 for orienting the devices 7 for emitting steam jets, e.g., joystick-shaped, having an ergonomic handle for an improved manoeuvrability by the operator.

Such means 26 for orienting the devices 7 is apt to cooperate with the control unit 20 so that the steam flow is directed each time on the weeds to be killed.

The effect had when the steam jets hit the invasive weeds 100 is a combined scalding-withering one, followed by a progressive desiccation of the plants concerned by the treatment.

A second embodiment of the shrubber according to the present invention comprises a second boiler 5 connected to the distribution system 10, in an intermediate position between the first boiler 3 and the devices 7 for emitting steam jets.

Thus, it is carried out a second stage of heating, functional for producing superheated steam 6. This superheated steam 6 possesses a withering and desiccating power still increased with respect to the steam produced in the boiler 3 and, emitted in jets from the devices 7, causes over short times the death of the weeds hit thereby.

In the boiler 5 there are typically reached, by way of example, temperatures in the region of 160 °C and pressures of about 4.5 atm.

A third and preferred embodiment of the shrubber according to the present invention provides the additional introduction of a system for producing hot air.

Such a system comprises a system 30 for conveying air from an air inlet 31 and a device 32 for heating air, e.g., an exchanger in which one or more resistor heating members 8 are housed.

Said conveying system 30 preferably comprises a compressor 34 for adjusting the inletting under pressure of air in the heating device 32.

The system for producing hot air can be activated or deactivated at will via actuation means with which the control unit 20 may advantageously be provided.

The third and preferred embodiment of the shrubber illustrated herein further comprises one or more orientable outlets 33 for emitting hot air jets.

It is envisaged the option that a plurality of fans, e.g., helical, arranged in the heating device 32, foster the outflow of the hot air toward the orientable outlets 33.

The emitting direction of the hot air jets is definable by the operator by virtue of means 27 for orienting said outlets 33.

Advantageously, it is provided that the adjustment of the direction of ejection of the devices 7 be such as to adapt to the height reached by the weeds and to their positions on the terrain.

Therefore, the tilt of the steam jets should vary in the vertical direction and in the horizontal direction, so that the useful radius of action covers anyhow the area concerned by the treatment.

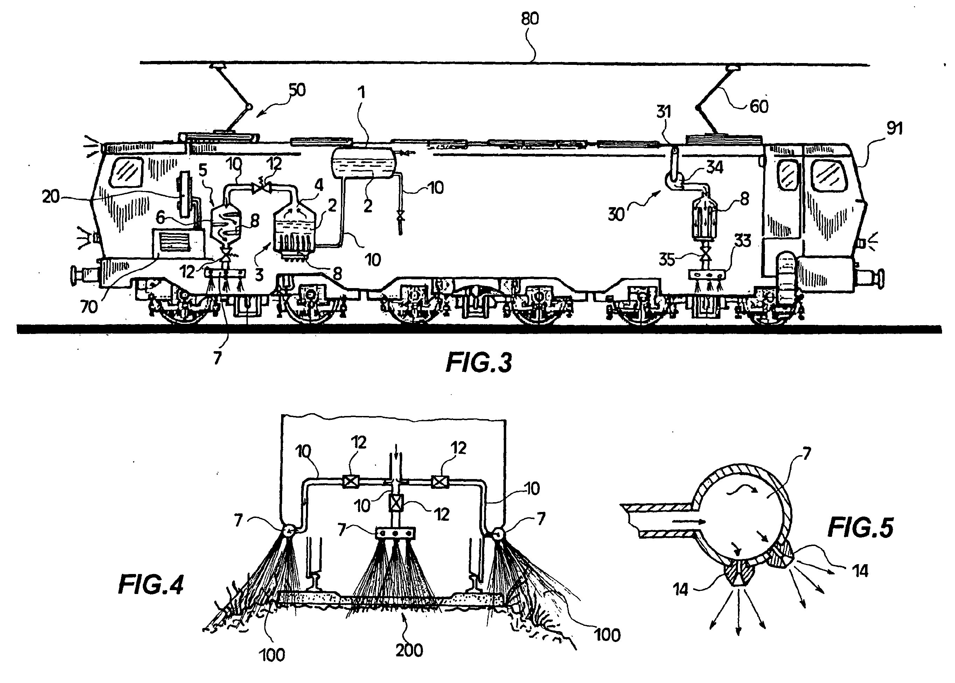

As it can be seen from figure 5, each of the orientable devices 7 is shaped so as to include one or more orientable nozzles 14, e.g. of the articulated joint type, for an improved covering of the area concerned by the reclamation.

Likewise, the orientable outlets 33 can in turn incorporate one or more orientable nozzles 14.

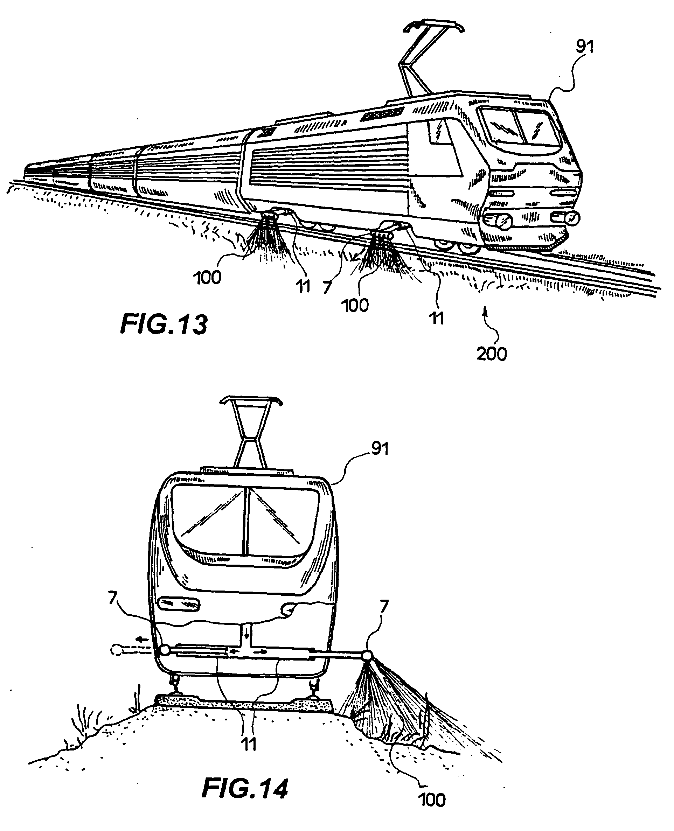

The orientable devices 7 and the orientable outlets 33, with the related nozzles 14, can be mounted on telescopic arms 11, as illustrated in figure 13 and in figure 14.

The deployment length of said telescopic arms 11 is adjustable via a related command of the control unit 20.

Preferably, the arms 11 are deployable up to lengths of about 4 m.

Thus, by virtue of a greater or lesser deployment of the telescopic arms 11, it is allowed an improved directioning of the jets of hot air and of steam on the regions where the infesting weeds to be killed are actually rooted, until hitting the more developed and sturdy bushes.

According to an alternative embodiment, the telescopic arms 11 could incorporate one or more articulations 120, e.g., elbow joints, so as vary the tilt thereof at will and obtain a specific direction of delivery of the jets.

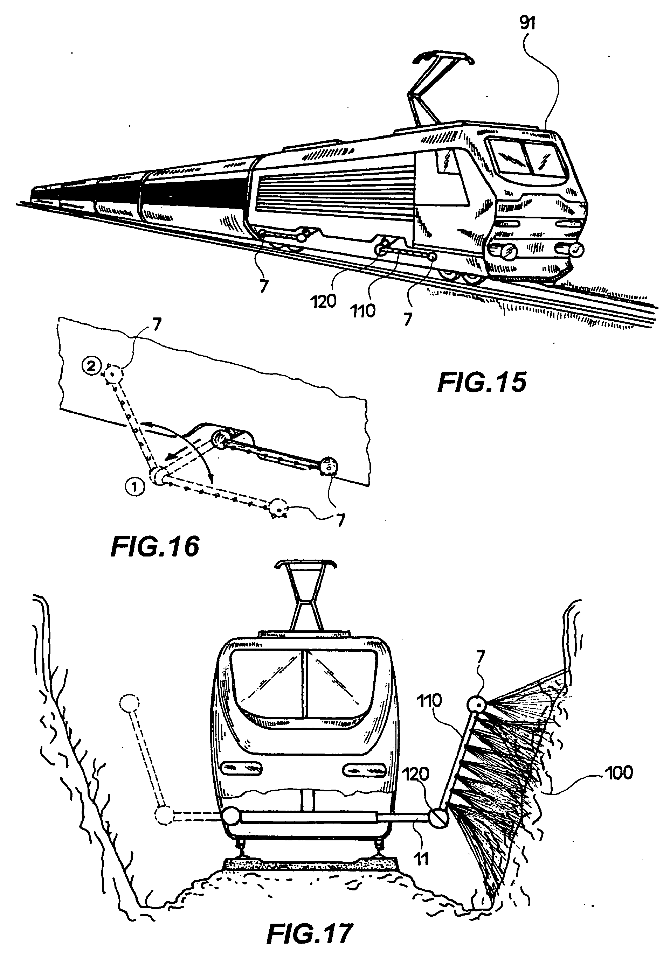

As illustrated in figure 17, the telescopic arms 11 can comprise extensions 110, orientable by virtue of articulations 120, for attaining an optimally distributed spraying, e.g. via an arrangement of the extensions 110 parallelly to the terrain onto which the infesting weeds grow.

This alternative embodiment is particularly indicated in case the killing of the infesting weeds is to be carried out on a variously sloped terrain, e.g., having steep sides, hollows, sinkings, and various irregularities.

In figure 17 it is exemplified the case of an apparatus according to the present invention, mounted on a train 91, for reclaiming a stretch in which the rails 200 are located on the bottom of an embankment.

It is understood that such an apparatus could, through suitable adjustments, be effectively mounted even on a means of road transport.

With regard to this embodiment, further illustrated in figures 15 and 16, the extensions 110 of the telescopic arms 11 are positioned in a non-operative condition along the side frames of the train 91, e.g., inside suitable slots for an improved streamline, and are deployed and revolved only as needed.

The steps of deploying the telescopic arms 11 and of orienting the extensions 120 are schematized in figure 16 with the imposing of a translatory and rotary motion, respectively.

The orientable devices 7 and/or the orientable outlets 33 according to this embodiment can be mounted onto the ends of the swinging extensions 120.

The extensions 120, e.g., with a substantially tubular structure, may incorporate holes for delivering steam or hot air.

Thus, there can be carried out a spraying of steam and/or hot air on the entire stretch of terrain concerned, even in the presence of relevant slopes.

The jets of steam and of hot air, by hitting the weeds, produce a synergistic effect such as to cause a natural withering of the vegetative portion of the plants.

Emitting of the jets of steam and hot air may be combined and concomitantly set via a command onto the control unit 20.

Alternatively, the emitting of the steam jets may be delayed with respect to that of the hot air jets.

Experimental texts highlighted that in order to attain an optimal result it is appropriate that the passage of the hot air jets be immediately followed by the passage of the steam jets.

In this second case, said synergistic effect is particularly evident in the effectiveness with which the withering of the hit weeds is produced.

In order to make the action of said jets still more aggressive on the weeds, the water contained in said tank 1, or at most contained inside the boiler 3 of the first heating stage, may advantageously be additioned with substances dissolved therein having herbicidal power.

Such substances may comprise common sodium chloride or known presently available herbicides.

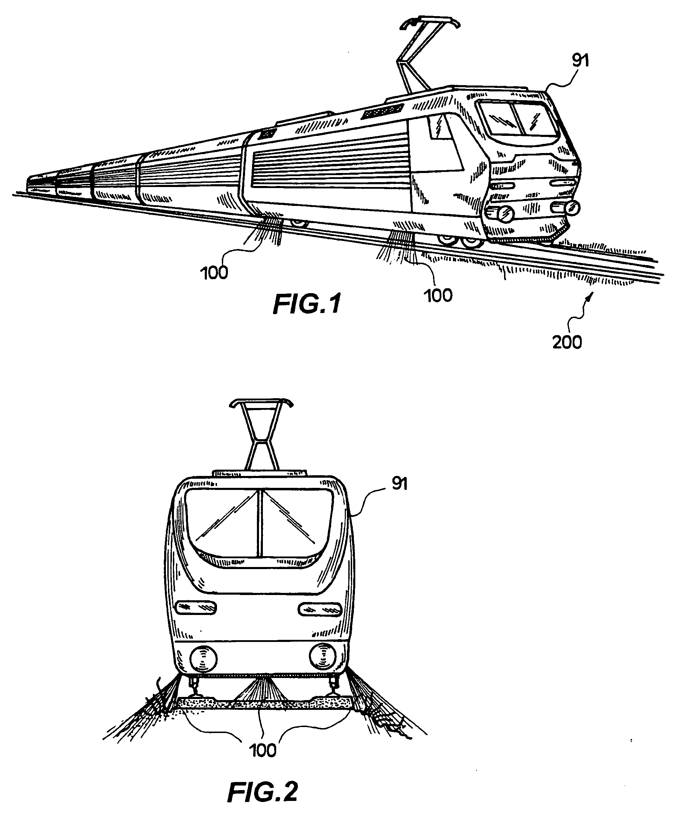

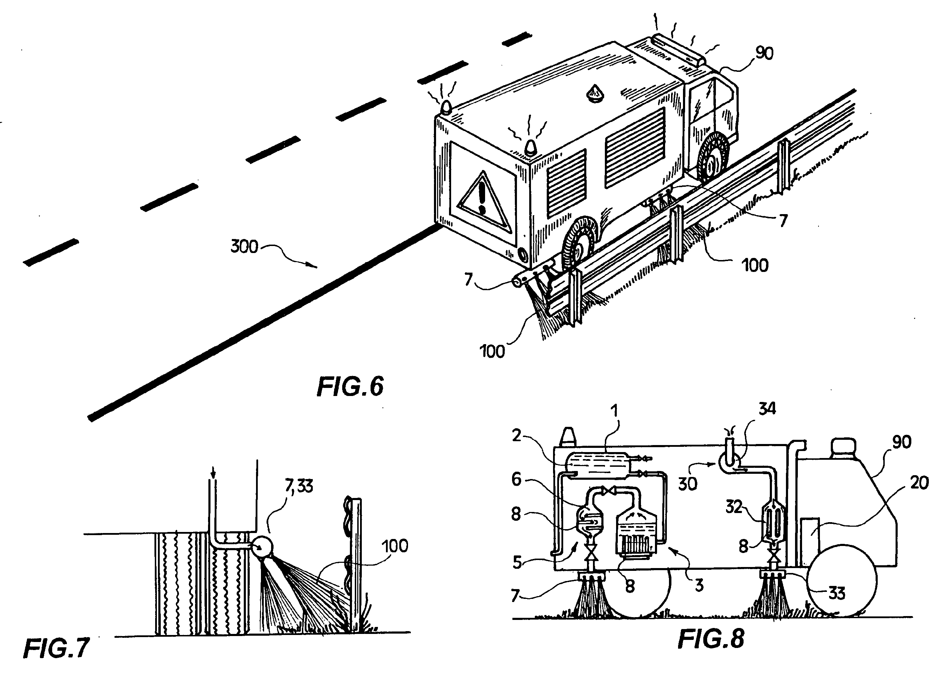

In the two preferred embodiments of the shrubber according to the present invention, illustrated the first one in figures 1, 2, 3 and 4 and the second one in figures 6, 7 and 8, respectively, the shrubber is apt to be integrated on a means of transport.

With reference to the abovementioned figures, such a means of transport is a rail vehicle, in this case a train 91, and a road vehicle 90, respectively.

As exemplified in figures 1, 2, 6 and 7, some of the orientable devices 7 and some of the orientable outlets 33 are arranged at one or both sides of the means of transport on which the shrubber according to the present invention is integrated.

The configuration with the spraying devices on both sides of the means of transport allows, e.g., in the case of the train 91, to advantageously carry out the reclamation concomitantly on the two rails 200.

The arrangement on one side only allows instead, e.g., in the case of reclamation on a motorway stretch 300, to concentrate the herbicidal power on one side of the motorway.

It will be up to the driver to adjust the cruising speed of the means of transport so as to optimise the impact of the jets sprayed on the weeds.

With particular reference to the case in which the shrubber is mounted on a train, preferably some of the orientable devices 7 and some of the orientable outlets 33 are arranged within the rail span, so that also the weeds grown in the space between the rails 200, e.g., about the sleepers, be hit.

Alternatively, the shrubber according to the present invention can be specially shaped to be carried by an operator 500.

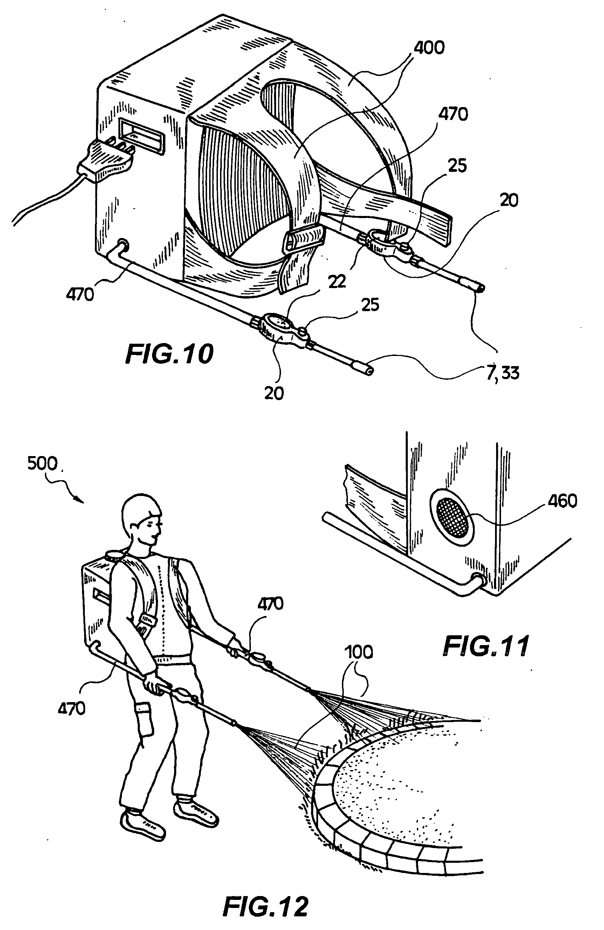

In this case, as it is evident from figure 10, said shrubber can be designed to be shoulder-carried by the operator 500 by suitable shoulder straps 400 obtained onto the body of the apparatus.

In the configuration proposed in figures 10, 11, 12, the shrubber is power-supplied directly by the mains or by a battery, e.g., rechargeable.

It is envisaged the option of integrating in the shrubber having a shoulder configuration a generating set apt to ensure a certain minimum autonomy of operation in zones where a mains is inaccessible.

It provides a duct, closed by a removable cap 450, for filling with water 2 intended for the production of steam.

In figure 11 it is evident the inlet 460 from which the air for the operation of the shrubber is collected.

Two side arms 470, optionally extensible, i.e., of telescopic kind, that can be grabbed by the operator 500 with the right and left hand, respectively, and swinging in the vertical direction and in the horizontal direction, are apt to deliver the jets of hot air and of steam, respectively.

In this case, the control unit 200 assumes the form of detection instruments 22 obtained onto the arm, apt to display the conditions of temperature and pressure inside the apparatus, and of adjacent respective pushbuttons or handles 25 for actuating the system for producing steam or air, respectively, and adjusting the delivery pressure and the flow rate of the jets.

The present invention further relates to an innovative method for killing infesting weeds 100.

Said method comprises a first step of collecting a given quantity of water 2 from a tank 1.

Then, the method of reclamation provides that the collected water 2 be used in a first boiler 3 to produce steam 4 via one or more heating members 8.

Subsequently, the produced steam 4 is emitted in jets directed on the weeds 100, so as to carry out their killing.

According to a preferred variation of the method, the described steam production stage constitutes a first step of effective pre-heating, there ensuing a subsequent stage of heating the steam 4 for producing superheated steam 6.

At said second stage, e.g., in the prearranged boiler 5, there are reached the temperature of 160 °C and the pressure of about 4.5 atm.

As disclosed hereto, the method for killing infesting weeds 100 according to the present invention may provide the step, optionally concomitant and carried out parallelly to the steam producing one, of conveying air from an air inlet 31.

To this collecting there ensues the step of producing hot air in a heating device 32 via one or more heater devices 8 and of emitting in jets said hot air so that said jets be directed on the infesting weeds 100.

The present invention has hereto been described according to preferred embodiments thereof given by way of example and without limitative purposes.

It is understood that other embodiments may be envisaged, all to be construed as falling within the protective scope thereof, as defined by the appended claims.

## Claims

1. A shrubber for killing infesting weeds (100) nearby and/or at communication routes (200; 300) and the like, comprising:
• a system for producing steam, comprising:
o a tank (1) apt to contain a reserve of water (2); and
o at least one first boiler (3) apt to the production of steam (4) from said reserve of water (2) via one or more heating members (8);
• a distribution system (10) of the water (2) and the steam (4);
• one or more orientable devices (7) connected to said distribution system (10) for emitting steam jets;
• a control unit (20) for governing the distribution of the water and the steam (4), the values of temperature and pressure reached in said first boiler (3); and
• means (26) for orienting said devices (7) for emitting steam jets, apt to cooperate with said control unit (20);
wherein the passage of said steam jet (6) on said weeds (100) is such as to carry out their killing.

2. The shrubber according to claim 1, wherein said shrubber further comprises:
• a system for producing hot air, comprising:
o a system (30) for conveying air from an air inlet (31); and
o a device (32) for heating said air;
• one or more orientable outlets (33) for emitting hot air jets; and
• means (27) for orienting said outlets (33) for emitting hot air jets, apt to cooperate with said control unit (20);
wherein said control unit (20) further comprises means for activating/deactivating the system for producing hot air.

3. The shrubber according to one of the claims 1 or 2, supplied with electric energy and comprising a power supply system (50) for collecting (60) electric energy from a mains (80) and voltage transforming (70), or comprising a power supply unit.

4. The shrubber according to claim 2 or 3, wherein the configuration is such that, in an operative phase, the passage of the hot air jets onto the weeds (100) is followed by the passage of the steam jets (6).

5. The shrubber according to claim 4, comprising a second boiler (5) connected to said distribution system (10) in an intermediate position between said first boiler (3) and said devices (7) for emitting steam jets, so as to carry out a second heating stage for producing superheated steam (6) apt to be emitted in jets by said devices (7).

6. The shrubber according to any one of the claims 2 to 5, wherein said system (30) for conveying air comprises a compressor (34) adjusting the inletting under pressure of air in said heating device (32).

7. The shrubber according to one of the claims 1 to 6, wherein said distribution system (10) comprises flow control valves (12) for the flow rate of water (2) or steam (4; 6).

8. The shrubber according to one of the claims 2 to 7, wherein each of said orientable devices (7) for emitting steam jets (6) and/or each of said orientable outlets (33) for emitting hot air jets comprises one or more orientable nozzles (14).

9. The shrubber according to one of the claims 1 to 8, wherein said control unit (20) comprises control interfaces (22) and respective actuation means (25).

10. The shrubber according to any one of the preceding claims, wherein said reserve of water (2) in said tank (1) contains substances dissolved therein having herbicidal power.

11. The shrubber according to any one of the claims 3 to 10, wherein said one or more heating members housed in said first or second boiler (3; 5) are resistors (8).

12. The shrubber according to any one of the claims 3 to 11, wherein in said heating device (32) there is housed resistor means (8) for converting electric energy into thermal energy.

13. Shrubber according to any one of the claims 5 to 12, wherein in said second boiler (5) of said second heating stage there are reached the temperature of 160°C and the pressure of about 4.5 atm.

14. The shrubber according to any one of the preceding claims, apt to be carried by an operator (500).

15. The shrubber according to any one of the preceding claims, apt to be integrated on a means of transport.

16. The shrubber according to claim 9 and claim 15, wherein said control unit (20) comprises a control board that can be housed in an operating cab of said means of transport, consultable and operable therein by an operator (500).

17. The shrubber according to claim 15 or 16, wherein some of said orientable devices (7) for emitting steam jets and some of said orientable outlets (33) for emitting hot air jets are arranged at one or both sides of said means of transport.

18. The shrubber according to one of the claims 15 to 17, wherein said means of transport is a road vehicle (90).

19. The shrubber according to claim 18, wherein said power supply unit of said road vehicle (90) is a voltage generator, typically for use in industrial works.

20. The shrubber according to one of the claims 15 to 17, wherein said means of transport is a rail vehicle (91) power-supplied from supply mains.

21. The shrubber according to claim 20, wherein said power supply system (50) of said rail vehicle (91), for collecting (60) electric energy and reducing (70) voltage, comprises a converter frame.

22. The shrubber according to claim 20 or 21, wherein some of said orientable devices (7) for emitting steam jets (6) and some of said orientable outlets (33) for emitting hot air jets are arranged within the rail span.

23. The shrubber according to one of the claims 2 to 22, wherein said orientable devices (7) and/or said orientable outlets (33) are mounted on telescopic arms (11).

24. The shrubber according to claim 23, wherein said telescopic arms (11) comprise swinging extensions (110) and incorporate one or more articulations (120) for swinging said extensions (110).

25. The shrubber according to claim 24, wherein said extensions (120) incorporate holes for emitting said steam jets and/or said hot air jets.

26. A means of transport, **characterised in that** it comprises a shrubber according to one of the claims 1 to 25.

27. A method for killing infesting weeds (100), comprising the steps of:
- collecting a given quantity of water (2) from a tank (1);
- producing steam (4) from said given quantity of water (2) in a first boiler (3) via one or more heating members (8), said steam (4) being apt to be emitted in jets; and
- directing said steam jets on said infesting weeds (100) so as to carry out their killing.

28. The method for killing infesting weeds (100) according to claim 27, further comprising the step of arranging a subsequent stage of heating the steam (4) for producing superheated steam (6) apt to be emitted in jets directed on said infesting weeds (100).

29. The method for killing infesting weeds (100) according to claim 27 or 28, further comprising the steps of:
- conveying air from an air inlet in a heating device (32);
- producing hot air in said heating device (32) via one or more heating members (8), said hot air being apt to be emitted in jets; and
- directing said hot air jets on said infesting weeds (100)
wherein the emitting of the hot air jets anticipates the emitting of the steam jets.

30. The method for killing infesting weeds (100) according to claim 28 or 29,
wherein in said subsequent stage of heating the steam (4) there are reached the temperature of 160°C and the pressure of about 4.5 atm.
